# EUROPEAN PATENT SPECIFICATION

(11) **EP 3 352 420 B1**
(45) Date of publication and mention of the grant of the patent: **10.06.2020**
(21) Application number: 18152776.3
(22) Date of filing: 22.01.2018
(51) Int. Cl.: H04L 12/28, G05B 15/02

(54) **PORTABLE CONFIGURATION PACKAGE FOR PROGRAMMABLE ELECTRICAL SYSTEM**
TRAGBARES KONFIGURATIONSPAKET FÜR EIN PROGRAMMIERBARES ELEKTRISCHES SYSTEM
PAQUET DE CONFIGURATION PORTABLE POUR SYSTÈME ÉLECTRIQUE PROGRAMMABLE

(30) Priority: 24.01.2017 BE 201705039
(43) Date of publication of application: 25.07.2018
(73) Proprietor: Niko NV, 9100 Sint-Niklaas (BE)
(72) Inventor: VELDEMAN, Pol, 9140 Temse (BE); VAN OVERLOOP, Isabelle, 9032 Wondelgem (BE); ZWANCKAERT, Stijn, 9770 Kruishoutem (BE)
(74) Representative: DenK iP

(56) References cited:
- US-A1- 2004 163 073
- US-A1- 2011 015 797
- US-A1- 2014 277 769
- US-B1- 6 754 885

## Description

### Field of the invention

The invention relates to the field of automated electrical systems for buildings. More specifically it relates to a processing unit for controlling a programmable electrical system of a building, a programmable electrical system comprising such processing unit, a data carrier comprising a data package, a transmission of a data package, a method for configuring a programmable electrical system in a building and a related computer program product.

### Background of the invention

It is known in the art to use software-controlled automation systems in buildings. For example, the European patent application EP 2 482 152 discloses a method that allows an installer to program the operation of such automation system. In accordance with such method, actions may be defined to link the behavior of controllable elements of the automation system to predetermined triggers or inputs associated with elements of the automation system. For example, a layout of the building may be entered in a software system, and various input and output units, as well as programmed actions thereof, can be added to the layout.

By using such software interface, installers may be more motivated to experiment with a wide range of available functions. Nevertheless, various intrinsic features of the software may be rarely used, for example due to a lack of familiarity of the installer with less used options and/or due to complex combinations of automation system elements and associated actions that are required to perform a specific function, e.g. because such input units, output units and programmed actions all need to be defined or added separately.

EP 2 482 150 discloses a device for configuring a programmable electrical system in a building. This electrical system comprises at least one output unit and at least one input unit, and a storage means comprising a library of predefined actions. Each action defines a behaviour of one or more output units as a function of a status of one or more input units. For each action, a corresponding description and the one or more output units and one or more input units associated therewith are stored. An interaction means is furthermore arranged to communicate an overview of at least a part of the actions to a user, to have a user select one of the respective actions, and, after selecting a particular action by the user, to communicate the description thereof to a user.

US201115797 A1 discloses a system for home automation, in which utility consumption of at least one subsystem of a facility is reduced. A utility meter is coupled to the subsystem for monitoring utility consumption of the subsystem and provides data corresponding to the measured energy consumption. A controller in communication with the subsystem and the energy meter is configured to control the operation of the subsystem by employing an operating protocol with the protocol dependent on the data received from the utility meter. US2004163073 A1 discloses an automatic management of components within a controlled environment. A control server, or similar central processor, manages the distribution of data (including audio and video), voice, and control signals among a plurality of system components (such as, televisions, monitors, PDAs, portable stereo, lighting, ovens, alarm clocks, etc.) connected via a wired and/or wireless communications network. A portable controller allows a user to access and control the system components from any location within a controlled residential and/or non-residential environment, including its surrounding areas. One or more control macros can be established to control the operations and/or functions of the system components. A control macro includes commands for enabling the control server to control the system components. The control macro can be manually activated by a user, or automatically executed upon the occurrence of a commencement parameter. The control macro can also be automatically particularized for application in a specific context.

US6754885 B1 discloses a control of object appearance in a process control configuration system for configuring process, environmental, industrial and other control systems. Such apparatus employs "appearance" objects (or other data and/or programming constructs) defining the appearance of configurable system components in graphical editors or other views in which the components may be depicted. "Placeholder" objects (or other constructs) persist the location, size, color, or other aspects of appearance defined by an appearance object for a configurable component in views in which it is actually depicted. By way of example, a process control configuration apparatus uses "configurable" objects to define blocks, loops and other components of a process control system. Appearance objects provide (or reference) icons or representations indicating how the configurable objects are to be depicted, e.g., in a configuration editor. Placeholder objects are created for each configurable object that is placed in a configuration using that editor. The placeholder objects identify the sizes, locations, colors, etc., of the icons used in the editor to represent the configurable objects.

US2014277769 A1 discloses managing demand-response programs and events. An energy management system in operation has an intelligent, network-connected thermostat located at a structure. The thermostat acquires various information about the residence, such as a thermal retention characteristic of the residence, a capacity of an HVAC associated with the residence to cool or heat the residence, a likelihood of the residence being occupied, a forecasted weather, a real-time weather, and a real-time occupancy. Such information is used to manage the energy consumption of the structure during a demand-response event.

### Summary of the invention

It is an object of embodiments of the present invention to provide good and efficient means and methods for allowing a user to configure and/or reconfigure an automated electrical system of a building.

It is an advantage of embodiments of the present invention that use-case scenarios can be easily configured in an automated electrical system, even when such use-case requires various different types of addressable elements in the automated electrical system, multiple interrelated actions, virtual inputs and/or virtual outputs.

It is an advantage of embodiments of the present invention that an easy and fast interface can be provided to allow an installer to configure an automated electrical system of a building.

It is an advantage of embodiments of the present invention that an automated electrical system can be easily updated, finetuned and/or changed by an installer, or even by an end-user, e.g. after deployment of the system.

It is an advantage of embodiments of the present invention that an automated electrical system can be easily controlled by providing an input trigger to a complex use-case scenario, e.g. in which the resultant behavior of the automated electrical system depends on internal variable states and/or involves nonlinear and/or non-Boolean processing of the related input states.

It is an advantage of embodiments of the present invention that an automated electrical system can be easily controlled, e.g. by providing an input trigger to a use-case scenario via a user interface, such as a web-based interface, a dedicated app for a mobile phone or tablet device, and/or an application-specific interface, such as a dedicated touch screen.

It is an advantage of embodiments of the present invention that a library of use-case scenarios is provided that can be easily extended by new use-case scenarios and/or in which use-case scenarios can be easily updated, e.g. without requiring an update of software for rendering an interaction interface that uses this library.

It is an advantage of embodiments of the present invention that flexibility is provided in developing such use-case scenarios, e.g. allowing fast development iterations that can be incrementally tested and/or deployed on live systems.

It is an advantage of embodiments of the present invention that compartmentalization is provided between the development of core software for rendering a user interface and/or for controlling an automated electrical system and development of use-case scenarios defined by interrelated actions involving components of such automated electrical system. It is a further advantage that use-case scenarios can be developed, e.g. by installers, field-testers, customer support agents or hobbyist developers, without compromising the integrity of the core user interface software and/or the core control software of such electrical system.

It is an advantage of embodiments of the present invention that use-case scenarios can be reused in different automated electrical systems, e.g. can be shared between installers and/or end-users.

The above objective is accomplished by a processing unit, a programmable electrical system, a method, and a computer program product, defined respectively by claims 1, 13, 14 and 15, according to the present invention. The dependent claims define various embodiments.

In a first aspect, the present invention relates to a processing unit for controlling a programmable electrical system of a building, in which the electrical system comprises a plurality of addressable elements. The processing unit comprises a storage medium for storing a plurality of data packages, each data package comprising a descriptive part and an algorithmic part. The processing unit also comprises an interaction interface for enabling a user, i.e. for receiving an input from the user, to select one of the plurality of data packages and for configuring an instance of the selected data package by interactively presenting the user with choices and/or options relating to the data package. The processing unit comprises a control program for controlling the plurality of addressable elements of the programmable electrical system. The control program is configured by the interaction interface. In operation of the electrical system, the algorithmic part is executed by the processing unit when called by the control program. The processing unit also comprises an input interface for receiving an isolated data package from an external source and for importing the isolated data package into the plurality of data packages on the storage medium. Furthermore, the descriptive part defines the choices and/or options relating to the data package that can be configured by the interaction interface. The processing unit comprises an output interface for exporting a data package in the plurality of data packages on the storage medium as an isolated data package and for providing this isolated data package to an external source.

In a processing unit in accordance with embodiments of the present invention, the input interface may be adapted for receiving the isolated data package in a form that is also suitable for being imported by another processing unit in accordance with embodiments of the first aspect of the present invention, the other processing unit being for controlling a different programmable electrical system that comprises a different plurality of addressable elements.

In a processing unit in accordance with embodiments of the present invention, the descriptive part may comprise data for describing how the user can interact with the data package through the interaction interface.

In a processing unit in accordance with embodiments of the present invention, the descriptive part may comprise a definition of at least one parameter used by the algorithmic part. The interaction interface may be adapted for interactively presenting the user with choices and/or options for configuring the at least one parameter.

In a processing unit in accordance with embodiments of the present invention, the descriptive part may comprise a description of the data package, and the interaction interface may be adapted for communicating the description of the data package to the user.

In a processing unit in accordance with embodiments of the present invention, the descriptive part may comprise a definition of at least one internal variable used by the algorithmic part.

In a processing unit in accordance with embodiments of the present invention, the data package may relate to a use-case scenario and/or an action, in which the algorithmic part may comprise an executable code for implementing at least one action defining behavior that links a plurality of types of elements defined by the descriptive part.

In a processing unit in accordance with embodiments of the present invention, the plurality of types of elements may comprise at least two of a virtual input node, a virtual output node and/or a type of addressable element of the programmable electrical system that is capable of acting as an input node and/or an output node. For example, the plurality of types may comprise at least one type of addressable element of the programmable electrical system (that is capable of acting as an input node) and/or at least one virtual input node. The plurality of types may also comprise at least one type of addressable element of the programmable electrical system (that is capable of acting as an output node) and/or at least one virtual output node.

For example, the executable code may use, when executed, at least one internal variable that is declared readable for instances of other use-case scenarios, in which the at least one internal variable, e.g. its runtime instantiated value, may be exposed (e.g. exported) in the form of a virtual output node. Likewise, the executable code may use, when executed, at least one external variable that is received from an instance of another use-case scenario, in which the at least one external variable is addressed (e.g. imported) in the form of a virtual input node.

Thus, the 'virtual' input node may be characterized by its suitability for being configured as an input of a configurable link between a pair of use-case scenario's (or their respective run-time instantiations), and the 'virtual' output node may be characterized by its suitability for being configured as output of such link.

In a processing unit in accordance with embodiments of the present invention, the algorithmic part may define a behavior of at least one element acting as an output node as a function of a status of at least one element acting as an input node.

In a processing unit in accordance with embodiments of the present invention, the interaction interface may be adapted for presenting a representation of a layout of the programmable electrical system to the user.

In a processing unit in accordance with embodiments of the present invention, the interaction interface may be adapted to enable the user, i.e. adapted for receiving an input from the user, to select elements in the representation of the layout that correspond to each type of the plurality of types of elements required for the selected data package.

In a processing unit in accordance with embodiments of the present invention, the control program may be adapted for providing a state corresponding to a virtual output node of a first instance of a data package as input to a virtual input node of a second instance of the same or a different data package.

In a processing unit in accordance with embodiments of the present invention, the descriptive part may be formatted in a markup language that is both human-readable and machine-readable, e.g. as machine-parsable data.

In a processing unit in accordance with embodiments of the present invention, the algorithmic part is formatted in a scripting language that is both human-readable and machine-interpretable, e.g. as machine-interpretable and machine-executable code.

Embodiments of the present invention may also relate to a programmable electrical system comprising a plurality of addressable elements and a processing unit in accordance with embodiments of the first aspect of the present invention for controlling the programmable electrical system.

A data carrier is also described, comprising a data package stored thereon, in which the data carrier is adapted for interacting with an input interface of a processing unit in accordance with embodiments of the first aspect of the present invention, and in which the data package is adapted for being received by the input interface as an isolated data package and for being imported by the input interface into the plurality of data packages on the storage medium of the processing unit.

A data transmission of a data package is also described in which the data transmission is adapted for interacting with an input interface of a processing unit in accordance with embodiments of the first aspect of the present invention, and in which the data package is adapted for being received by the input interface as an isolated data package and for being imported by the input interface into the plurality of data packages on the storage medium of the processing unit.

In a second aspect, the present invention also relates to a method for controlling a programmable electrical system of a building, in which the electrical system comprises a plurality of addressable elements. The method comprises storing a plurality of data packages on a storage medium, in which each data package comprises a descriptive part and an algorithmic part. The method comprises importing an isolated data package, when received by an input interface from an external source, to the plurality of data packages on the storage medium. The method comprises enabling a user, i.e. receiving an input from the user, to select one of the plurality of data packages using an interaction interface, and configuring an instance of the selected data package by interactively presenting the user with choices and/or options relating to the data package. The method further comprises controlling the plurality of addressable elements of the programmable electrical system by a control program that is configured by the interaction interface, in which, in operation of the electrical system, the algorithmic part is executed by a processing unit when called by the control program. Furthermore, the descriptive part defines and/or specifies the choices and/or options relating to the data package that can be configured by the interaction interface. The method comprises exporting a data package in the plurality of data packages on the storage medium as an isolated data package and for providing this isolated data package to an external source.

In a method in accordance with embodiments of the present invention, at least one, e.g. each, of the plurality of data packages may relate to a use-case scenario and/or an action, in which the algorithmic part may comprise an executable code for implementing at least one action defining a behavior that links a plurality of types of elements defined by the descriptive part.

In a third aspect, the present invention also relates to a computer program product adapted for executing the steps of a method in accordance with embodiments of the second aspect of the present invention, when the computer program product is running on a computer.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 illustrates a programmable electrical system of a building in accordance with embodiments of the present invention.
FIG. 2 schematically illustrates a processing unit in accordance with embodiments of the present invention.
FIG. 3 illustrates an exemplary user interface screen relating to embodiments of the present invention.
FIG. 4 shows a list presented in the form of a tree having an expanded node in an exemplary user interface screen relating to embodiments of the present invention.
FIG. 5 shows another expanded node in an exemplary user interface screen relating to embodiments of the present invention.
FIG. 6 shows a representation of a layout of the programmable electrical system in an exemplary user interface screen relating to embodiments of the present invention.
FIG. 7 illustrates a state corresponding to a virtual output node of a first instance of a use-case scenario being provided as an input to a virtual input node of a second instance of a use-case scenario, in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a processing unit for controlling a programmable electrical system of a building. The electrical system comprises a plurality of addressable elements.

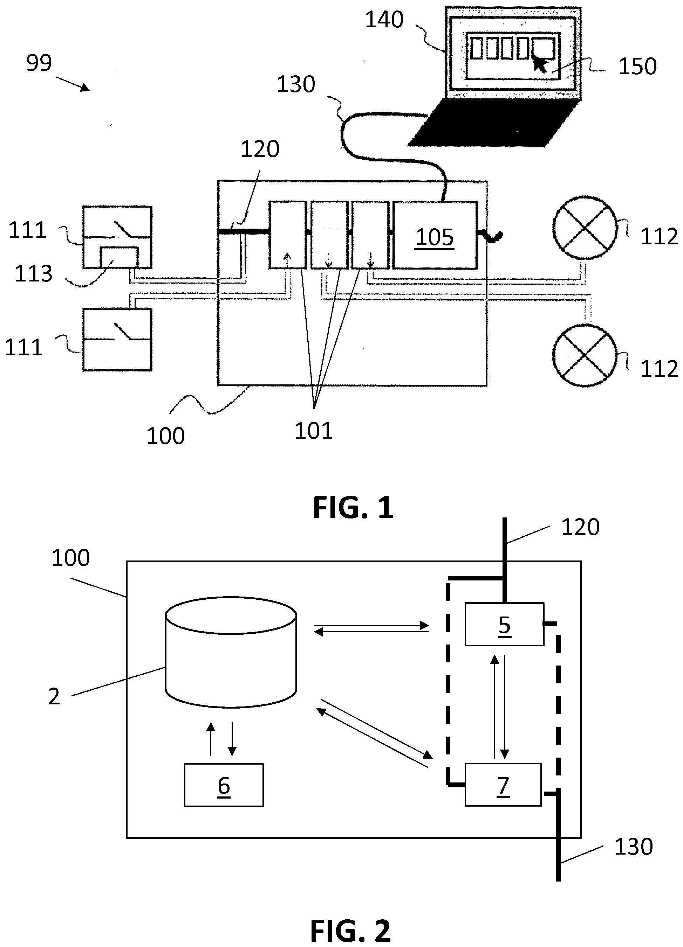

Referring to FIG. 1, embodiments of the present invention may also relate to the programmable electrical system 99 comprising the plurality of addressable elements 111,112 and a processing unit 100, for controlling the programmable electrical system 99, in accordance with embodiments of the present invention. For example, such programmable electrical system 99 may comprise a communication infrastructure for relaying control information from an addressable element 111 having input capabilities to the processing unit 100 and from the processing unit 100 to an addressable element 112 having output capabilities.

The processing unit 100 may comprise one or more centralized or decentralized processors 105. The processing unit 100 may comprise a communication bus 120. An addressable element 111,112 may be operably connected to the communication bus 120, e.g. by a communication module 113 integrated in the addressable element 111. An addressable element 111,112 may be connected to, e.g. wired directly to, an input/output module 101 for providing an interface between the addressable element 111,112 and the communication bus 120.

For example, the processing unit 100 may comprise, or may be comprised in, a central control box. An input/output module 101 may also be comprised in such central control box.

For example, the processing unit 100 may be configured using a configuration terminal 140, e.g. a personal computer, a smartphone, a tablet or a dedicated touch screen device. For example, a data communication network 130, e.g. a wired or wireless Ethernet connection, may connect the processing unit 100 to the configuration terminal 140. The processing unit 100 may for example render a graphical user interface 150 on the configuration terminal 140.

FIG. 2 schematically illustrates a processing unit 100 in accordance with embodiments of the present invention.

The processing unit 100 comprises a storage medium 2, such as a data memory, e.g. a RAM, ROM or FLASH memory, a solid state hard disk, a magnetic storage hard disk, or similar media suitable for storing digital data in a readily accessible manner to enable the processing unit 100, e.g. a central processing unit or distributed processing unit to read the stored data on the storage medium 2.

The storage medium 2 is adapted for storing a plurality of data packages, each data package comprising a descriptive part and an algorithmic part. For example, the storage medium may comprise at least one such data package, e.g. may comprise a plurality of such data packages stored thereon.

Such data package may relate to a use-case scenario and/or an action. For example, the storage medium may be adapted for storing a library of use-case scenarios and/or actions, e.g. may store a library of use-case scenarios and/or actions. For example, the algorithmic part of each data package may comprise an executable code for implementing at least one action defining behavior that links a plurality of types of elements defined, e.g. specified, by the descriptive part.

For example, a data package may relate to an action, in which the executable code implements an action that defines behaviour of elements of the types specified by the descriptive part. This action may define a behaviour of at least one of the elements acting as an output node as a function of a status of at least one of the elements acting as an input node.

For example, a data package may relate to a use-case scenario, in which the executable code implements a plurality of such interrelated actions that define behaviour of elements of the types specified by the descriptive part.

The descriptive part may specify a plurality of types of elements, e.g. that are required by and/or that can be optionally used in combination with the algorithmic part. The plurality of types of elements may comprise at least two of a virtual input node, a virtual output node and/or a type of addressable element 111,112 of the programmable electrical system 99 that is capable of acting as an input node and/or an output node.

For example, a type of element may comprise a virtual input type, in which this virtual input type can be virtually connected to a virtual output of another, or even of the same, data package. Likewise, a type of element may comprise a virtual output type, in which this virtual output type can be virtually connected to a virtual input of another, or even of the same, data package. The use of 'virtual' refers to the configuration of a link between an output state and an input state without directly involving an addressable element of the programmable electrical system 99 that is capable of acting as an input node and/or as an output node (e.g. in which the processing unit itself is not to be considered as an addressable element capable of acting as an input/output node).

A type of element may for example comprise an addressable element 111 of the programmable electrical system 99 that is capable of acting as an input node for providing an input to the processing unit 100, such as a button, a thermostat, a sensor, or a similar device that can output a value relevant for automating an electrical system 99 of a building, such as a home automation system. The type of element may be organized in a hierarchy of types, e.g. the type of element may be specified as a general value provider, such as an integer value provider, or more specifically as a Boolean output provider, for example more specifically as a two-state button, or even more specifically as a biased two-state button or an unbiased two-state button.

A type of element may comprise an addressable element 112 of the programmable electrical system 99 that is capable of acting as an output node for receiving an output provided by the processing unit 100, such as a light, a heating element, a cooling element, an actuator for moving shades or window dressing, a ventilation unit, or other such known elements for use in the electrical system 99 of a building. The type of element may be organized in a hierarchy of types, e.g. the type of element may be specified as a light, more specifically as a dimmable light, more specifically as a dimmable and color-configurable RGB light.

For example, in embodiments according to the present invention, the algorithmic part may define a behavior of at least one element acting as an output node as a function of a status of at least one element acting as an input node.

The data package, e.g. a use-case scenario, may relate to a data construct, e.g. a combined data and software construct, for combining logic and configurable properties to provide an easy-to-use interface, e.g. a wizard or guided action, e.g. to provide such interface in conjunction with the interaction interface 7.

The data package and/or the isolated data package may provide an easy to manage, to edit, to develop and/or to distribute unit of data and code, e.g. in a portable format, relating to a functionality linking components of a programmable electrical system of a building, e.g. of a home automation system.

The descriptive part defines choices and/or options relating to the data package that can be configured by the interaction interface 7, as described further hereinbelow.

The descriptive part may comprise data for describing how the user can interact with the data package through the interaction interface 7.

The descriptive part may comprise a definition of at least one parameter used by the algorithmic part. The interaction interface may be adapted for interactively presenting the user with choices and/or options for configuring the at least one parameter, as described further hereinbelow.

The descriptive part may also comprise a default value definition for the at least one parameter, a parameter data type of the at least one parameter, and/or an allowed parameter range for the at least one parameter.

The descriptive part may comprise a definition of at least one internal variable used by the algorithmic part. For example, the control program 5 may be adapted for taking such definition of at least one internal variable into account in managing the execution of code contained in the algorithmic part.

Furthermore, in embodiments of the present invention, an internal variable may be flagged as readable from instances of other data packages. For example, the internal variable may be exported in the form of a virtual output node, when the processing unit 100 processes the data package, e.g. by a control program 5 executing on the processing unit 100. For example, the internal variable may be exposed via a declaration of a getter function that can be called from outside the context of the use-case scenario to return a value representative of the state of the internal variable.

The descriptive part may also comprise a default value definition for the internal variable and/or an internal variable data type of the at least one internal variable.

For example, a parameter or internal variable may have an associated parameter type or internal variable type associated therewith, e.g. selectable from a number of possible parameter types, which may comprise an integer value, e.g. to indicate a light intensity value, an enumeration, such as a Boolean type, a string, e.g. an alert string such as "building is on fire", a time, such as a delay, a calendar object, or other data types known in the art.

The descriptive part may comprise a description of the data package. For example, the interaction interface 7 may be adapted for communicating the description of the data package to the user. For example, such description may comprise a description explaining the purpose of the data package, e.g. of the behaviour of the action or actions performed by the algorithmic part, e.g. a description of the behaviour of the plurality of interrelated actions as a coordinated whole.

The descriptive part may comprise tags, searchable strings, or identifiers for indicating a position in a hierarchical browsing system, e.g. a parent node identifier in such tree, e.g. corresponding to search and/or browsing functionality that may be provided by the interaction interface, as described further hereinbelow.

The descriptive part may comprise an icon or monogram, or a reference to such icon or monogram, e.g. for a graphical presentation thereof as may be provided by the interaction interface.

The descriptive part may be formatted in a markup language that is both human-readable and machine-readable, such as, for example, an Extensible Markup Language (XML) or a similar language, e.g. a mark-up language having a syntax structure for associating data elements with corresponding identifiers, e.g. with data field tags.

The algorithmic part may comprise executable code, e.g. for implementing at least one action, as referred to hereinabove. For example, such executable code may be stored in a machine language directly executable by the processing unit 100, in a byte-code format executable by the processing unit 100 in conjunction with an intermediate compiler, such as a just-in-time compiler, and/or in a human-readable computer language that is executable by the processing unit 100 in conjunction with an interpreter or script processor.

The algorithmic part may be formatted in a scripting language that is both human-readable and machine-interpretable.

While in embodiments of the present invention, the control program 5 may be adapted for executing, e.g. calling, compiling, interpreting and/or parsing, the algorithmic part in an application-specific bytecode or application-specific scripting language format, preferably, the algorithmic part may be formatted in a general purpose programming language, e.g. a cross platform and/or platform independent general purpose programming language. Particularly, the scripting language may be an embeddable and/or extendable language, such as Lua, TCL, Python, Perl, Ruby, Rexx, Ch, ECMAScript or JavaScript.

The control program 5 may thus comprise an embedded compiler and/or interpreter for the embeddable and/or extendable language. For example, the control program may provide functionality that can be called from the scripting language to control the system, e.g. may comprise hooks for the language of the algorithmic part.

The executable code of the algorithmic part may be adapted for computing an output state for the at least one of the elements that acts as output node for the action, e.g. taking into account a state of the at least one of the elements that acts as input node for the action. The executable code may be adapted for taking a parameter selection for the at least one parameter into account when computing the output state. The executable code may be adapted for taking a value of the at least one internal variable into account when computing the output state. The executable code may be adapted for changing a value of the at least one internal variable when computing the output state.

The executable code may implement an action separately, e.g. as a function, procedure, code block or code object determining the output state for the element(s) that acts as output node for that action, or may implement a plurality of actions, e.g. interrelated actions, together, e.g. as a function, procedure, code block or code object for determining an output state for at least one element acting as an output node for at least one of the actions.

The use-case scenario may form a black box construct, in which the descriptive part defines an interface for describing how a user can interact with the use-case scenario through the interaction interface 7, described further hereinbelow, and in which an algorithmic part, e.g. the executable code, defines action(s). For example, in operation of the electrical system 99, the algorithmic part can be executed by the processing unit 100, e.g. called by a control program 5 configured by the interaction interface 7.

The processing unit 100 further comprises an interaction interface 7 for enabling a user to select one of the plurality of data packages and for configuring an instance of the selected data package by interactively presenting the user with choices and/or options relating to the data package.

For example, the interaction interface may be adapted for presenting an overview of at least a part of the data packages, e.g. the use-case scenarios, available on the storage medium 2 to the user. For example, the interaction interface 7 may connect to the data communication network 130, e.g. via a wired or wireless Ethernet connection. For example the interaction interface 7 may connect the processing unit 100 to a configuration terminal 140. The interaction interface 7 may render a graphical user interface 150 on the configuration terminal 140.

The selection of such data package in the interaction interface 7 may create an instance of such data package, e.g. may associate the data package with suitable addressable elements 111,112 in the programmable electrical system 99 and may optionally configure parameters for finetuning the behavior of the instantiated data package, e.g. an instantiated use-case scenario.

The interaction interface 7 may furthermore be adapted for enabling the user to select one of the presented data packages, e.g. one of the presented use-case scenarios.

The interaction interface 7 may, for example, enable the user to select a data package from a list of available use-case scenarios in accordance with the content of the storage medium 2.

This list may be a full listing or may be filtered, e.g. by applying search terms, tags or using a hierarchical browsing system, e.g. by expanding sections of a tree in which the data packages are organized.

The data package may be presented to the user in a graphical user interface 150, e.g. as part of such list.

This presentation may comprise the display of an icon or monogram, e.g. using an icon or monogram in combination with a text string identifier. Alternatively, an icon or monogram associated with a parent node in a hierarchical structure, or a set of icons or monograms associated with a path of parent and ancestral nodes, may be displayed. For example, such icon or monogram associated with a parent and/or ancestral node may be stored separately from the data package, e.g. as a separately indexed file or table in the storage 2.

The interaction interface 7 may be adapted for communicating a description, e.g. stored in the descriptive part, of a selected data package to the user.

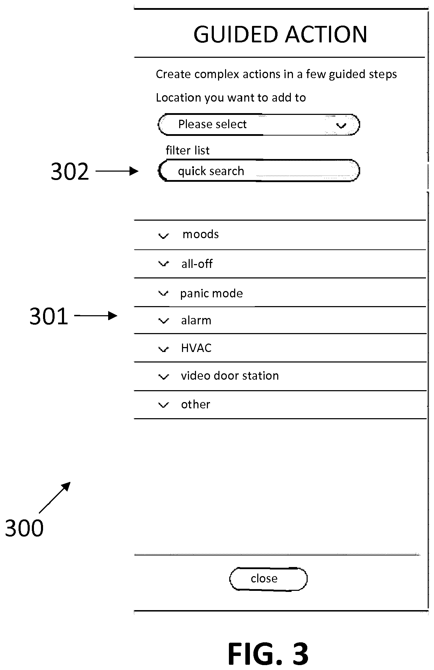

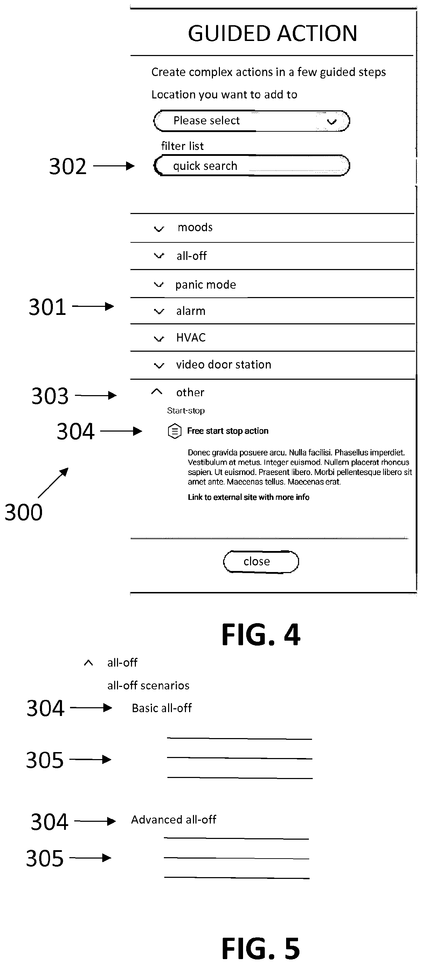

Referring to FIG. 3, an exemplary user interface screen 300, e.g. a window, dialog or part thereof, is shown that may be presented to the user by the interaction interface 7. The interaction interface 7 may enable the user to select a data package from a list 301 of available data packages in accordance with the content of the storage medium 2. This list may be filtered, e.g. using at least one filter control element 302. As shown in FIG. 3 and FIG. 4, the list may be presented in the form of a tree having collapsed nodes that are expandable to show child nodes of a selected parent node 303. In the example shown in FIG. 3 and FIG. 4, a parent node 303, e.g. 'other', may have at least one single child node 304, e.g. 'free start stop action'. In another example, shown in FIG. 5, another parent node 303 may be expanded, e.g. 'all-off', may be expanded to reveal two child nodes 304, e.g. 'basic all-off' and 'advanced all-off'.

The interaction interface 7 may be adapted for communicating a plurality of types of elements required for a selected data package, e.g. of a use-case scenario, to the user. The interaction interface 7 may be adapted for providing a description 305 of these types of elements, e.g. describing function, visual representation, use, appearance and/or possible embodiments of such type. For example, such description 305 may be a generic description determined by the type, or may be a description specifically included in the descriptive part of the selected data package.

The interaction interface 7 may be adapted for providing a description 305 of required or optional parameters, e.g. at least one parameter as defined by the descriptive part of the data package.

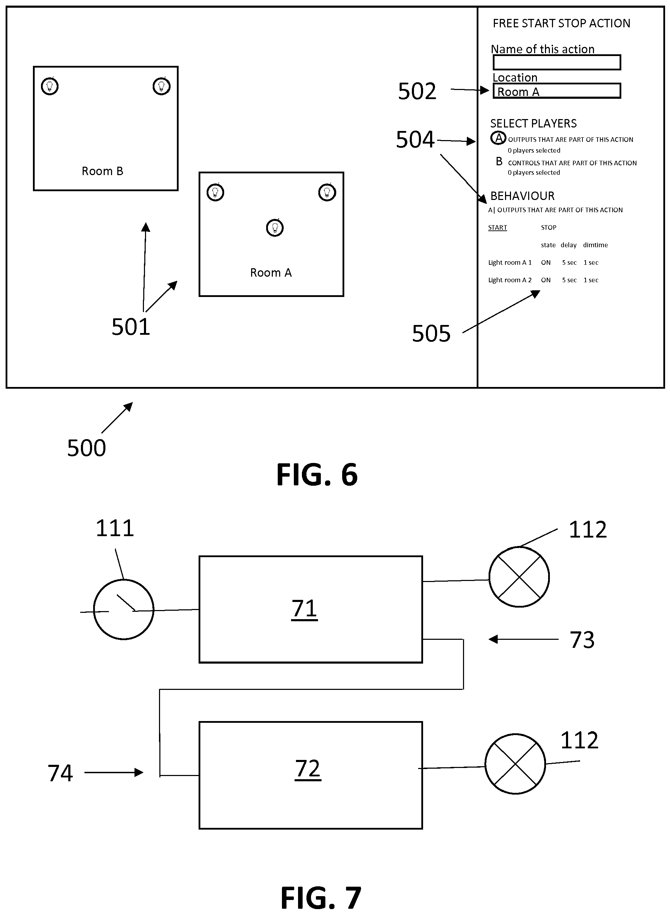

Referring to FIG. 6, the interaction interface 7 may be adapted for presenting a representation 500, e.g. a graphical representation, of a layout of the programmable electrical system 99 to the user. For example, this layout may comprise a plurality of distinct locations 501, which, for example, may correspond to physical rooms in the building.

In accordance with embodiments of the present invention, the interaction interface 7 may be adapted to enable the user to select elements in the representation 500 of the layout that correspond to a type of the plurality of types of elements specified by the descriptive part of the selected data package, e.g. specified as being required for, and/or specified as being optionally usable with, the selected data package.

The interaction interface 7 may be adapted for selecting a location 502 corresponding to one of the plurality of distinct locations 501 illustrated in the representation 500. The interaction interface 7 may be adapted for making only elements in the representation 500 available for selection that correspond to the selected location 502.

The interaction interface 7 may furthermore be adapted to provide prompts 504 to the user while enabling the user to select such elements. The interaction interface 7 may be adapted to indicate suitable elements, e.g. by highlighting, in the representation of the layout that correspond to a specific type, e.g. that are selectable as elements in the representation 500 as corresponding to a type or each type of the plurality of types, e.g. a specified in the descriptive part.

The interaction interface 7 may also enable the user to select parameter values for parameters defined by the descriptive part of the data package and/or for parameters that are intrinsic for a particular type of addressable element, e.g. using interface elements 505 for parameter adjustment. The data package may define a parameter as a global parameter for an instance of the data package and/or as a parameter to be attributed a value for each addressable element 111,112 of a particular type.

Referring again to FIG. 1 and 2, the processing unit 100 comprises a control program 5 for controlling the plurality of addressable elements 111,112 of the programmable electrical system 99. The control program 5 is configured by the interaction interface 7. In operation of the electrical system 99, e.g. of the processing unit as part of an operable electrical system 99, the algorithmic part is executed by the processing unit when called by the control program 5. For example, the control program 5 may be configured to interact with the plurality of addressable elements 111,112 using the communication bus 120.

The control program 5 may thus be adapted for executing program logic associated with the data package, e.g. contained in the algorithmic part of the data package. For example, the control program 5 may be adapted for executing program logic associated with a use-case scenario.

The program logic may be executed by applying inputs and/or outputs of the addressable elements 111,112 associated with the program logic in accordance with an instance of the data package, e.g. as configured by the interaction interface 7, by applying parameter values that are assigned to parameters of the data package in accordance with the instance, by keeping track of internal variables assigned to the instance and/or by routing state information between instances of data packages using links between virtual input nodes and virtual output nodes.

In embodiments in accordance with the present invention, the control program 5 may be adapted for providing a state corresponding to a virtual output node of a first instance of a data package as an input to a virtual input node of a second instance of a data package, e.g. in which both instances may be instances of the same or of different data packages. For example, a link between a virtual output node and a virtual input node may be configured using the interaction interface. For example, referring to FIG. 7, program logic, e.g. an algorithm, associated with a first data package 71 may generate an output that can be made available to a second data package 72 in the form of a input for program logic associated with the second data package. This relation between instances of respectively the first data package and the second data package may be configured by connecting a virtual output node 73, representative of the output generated by the program logic of the first use-case scenario 71, to a virtual input node 74 for the second use-case scenario 72.

The processing unit 100 also comprises an input interface 6 for receiving an isolated data package from an external source and importing the isolated data package to the plurality of data packages on the storage medium. However, the input/output interface may also be adapted for receiving a set, e.g. a combination, of such data packages and importing the data packages to the plurality of data packages on the storage medium.

The processing unit 100 comprises an output interface for exporting a data package in the plurality of data packages on the storage medium as an isolated data package and for providing this isolated data package to an external source.

The input interface 6 may be adapted for receiving the isolated data package in a form that is also suitable for being imported by another processing unit, in accordance with embodiments of the first aspect of the present invention, that is configured for controlling a different programmable electrical system that comprises a different plurality of addressable elements.

The input interface may for example comprise a connector for connecting to a portable data carrier, e.g. a flash drive or USB drive, a disc reader for reading a portable magnetic or optical disc, e.g. a CD-ROM drive or a DVD drive, and/or a network interface for receiving the isolated data packet from a remote network location, e.g. from a server in response to a download request, by upload onto the storage medium from a remote source, in response to a push request from a remote server, and/or through a distributed data exchange network, e.g. a peer to peer exchange network.

A data package may for example relate to a use-case scenario. Such use-case scenario may, for example, relate to a mood behavior, or a meta-level mood selection, e.g. a mood of moods behavior. In another example, a use-case scenario may relate to a basic all-off action, for powering down all relevant controllable devices, e.g. turning off lights, media devices, cooking appliances and/or closing curtains or shutters. A use-case scenario may also relate to a similar all-off action, but characterized by an additional walkway assistance, e.g. for lighting a path when leaving the building or retiring to a bedroom. For example, such use-case scenario may have a controllable parameter associated therewith for selecting a timeout for the walkway assistance mode.

A use-case scenario may also relate to a complex behavior capable of taking different embodiments of a specific type of addressable element 111,112 appropriately into account when defining a behavior. For example, a use-case scenario may define a motion detector that can handle different models or types of sensors to produce a standardized output trigger indicative of motion and/or presence of a person, e.g. in the form of a state of a virtual output node provided by an instantiation of the use-case scenario. For example, a motion detector use-case scenario may be adapted for processing an input provided by a miniature passive infrared (PIR) sensor, for processing an input provided by an outdoor PIR sensor, and/or for processing an input provided by an indoor wall PIR sensor. Furthermore, a motion detector use-case scenario may be adapted for processing an input provided by other sensor devices, e.g. a camera system, e.g. a security camera, a laser diode gate, an ultrasound range detector, a laser range finder, or other such sensor devices that can be used for indicating the presence or absence of a person.

For example, different use-case scenarios may be adapted for handling different types of such sensor and generating a standardized (virtual) output signal that can be interchangeably used by another use-case scenario requiring such standardized motion sensor input. Alternatively, a single use-case scenario can be adapted for requiring a generic motion sensor input, and may adapt its behavior dependent on the specific implementation of the generic motion sensor that was assigned to the generic input.

A use-case scenario may also relate to, for example, a presence simulation, e.g. adapted for controlling lights, curtains, shutters and/or other addressable elements to simulate the presence of an inhabitant or user of the building in his or her absence. It is a further advantage of embodiments of the present invention that complex behavior may be implemented easily, for example where such complex behavior may require a complex control algorithm, e.g. to provide randomized or constrained stochastic behavior. For example, a presence simulation could be adapted to monitor activity of lights and other devices of interest on the electrical system 99 when the user is present, and use the gathered statistical data to generate a randomized behavior pattern that is commensurate with a probability distribution associated with patterns of normal behavior when the user is present.

A use-case scenario may relate to an access control scenario, e.g. for configuring an access authentication using an outdoor video door station. Another access control scenario may for example relate to a bell-button configuration of such video door station. Another access control scenario could relate to a call and enter action, e.g. which may be triggered by a telephone network interface and/or by triggering a virtual input node directly using a network or internet connection to the control unit.

Another exemplary use-case scenario may relate to an alarm. Such alarm scenario may define various types of addressable elements for acting as inputs. For example, a generic push-button may be required for controlling and enabling and disabling of the alarm. Such generic push-button may also be implemented as a virtual input node, which for example can be triggered using a touch interface or by an output of another use-case scenario.

A virtual input node may be optionally included to trigger the alarm, e.g. receiving an output of a touch interface, e.g. a panic button, or receiving an output of another use-case scenario.

A motion detector, such as a virtual output node of the motion detector use-case scenarios described hereinabove, may be required, or optionally included, for triggering the alarm in response to a detected movement. A door contact trigger may be required, or optionally included, for triggering the alarm in response to the opening of a door. A light may be required, or optionally included, for being switched on during a pre-alarm phase. A light may be required, or optionally included, for being switched on when the alarm is triggered. A light may be required, or optionally included, for blinking when the alarm is triggered. A motor may be required, or optionally included, for actuating shutters when the alarm is triggered. Such use-case scenario may further define parameters that can be changed by the user during configuration. For example, a Boolean value parameter may indicate a preference of closing or opening connected shutters in response to triggering the alarm. Parameters may be included in such scenario for controlling, for example, a time between activating the alarm and an armed state of the alarm, a time between detecting an intruder and activating an alarm state, a timeout during which the alarm state remains active, an alert text string, e.g. to send to a touch interface or smartphone app via push-notification and/or a blink period. Furthermore, the states of the alarm, e.g. inactive, active and triggered, may be exposed via a virtual output node.

A data carrier is now described, comprising a data package stored thereon. This data carrier is adapted for interacting with an input interface of a processing unit in accordance with embodiments of the first aspect of the present invention. The data package is adapted for being received by the input interface as an isolated data package and for being imported by the input interface into the plurality of data packages on the storage medium of the processing unit.

A data transmission of a data package is now described. The data transmission is adapted for interacting with an input interface of a processing unit in accordance with embodiments of the first aspect of the present invention. The data package is adapted for being received by the input interface as an isolated data package and for being imported by the input interface into the plurality of data packages on the storage medium of the processing unit.

The present invention also relates to a method for configuring a programmable electrical system 99 in a building, in which the electrical system 99 comprises a plurality of addressable elements 111,112. The programmable electrical system may also comprise a processing unit 100 for controlling the programmable electrical system 99.

The method comprises storing a plurality of data packages on a storage medium 2, in which each data package comprises a descriptive part and an algorithmic part.

The method comprises importing an isolated data package, when this package is received by an input interface 6 from an external source, to the plurality of data packages on the storage medium 2, e.g. such that the isolated data package is included in the plurality of data packages stored on the storage medium.

The method comprises enabling a user to select one of the plurality of data packages using an interaction interface 7.

The method comprises configuring an instance of the selected data package by interactively presenting the user with choices and/or options relating to the data package.

The method further comprises controlling the plurality of addressable elements 111,112 of the programmable electrical system 99 by a control program 5, e.g. in accordance with the configured instance. The control program 5 is configured by the interaction interface 7. In operation of the electrical system 99, the algorithmic part is executed by a processing unit when called by the control program 5. This controlling may comprise executing the executable code corresponding to the configured instance.

Furthermore, the descriptive part defines the choices and/or options relating to the data package that can be configured by the interaction interface 7.

Each of the plurality of data packages may relate to a use-case scenario and/or an action. The algorithmic part of that data package may comprise an executable code for implementing at least one action defining a behavior that links a plurality of types of elements defined by said descriptive part. The algorithmic part of the data package may comprise a plurality of interrelated actions defining behaviors of elements of particular types, e.g. as may be defined by the descriptive part. Each action may define a behaviour of at least one of the elements acting as an output node as a function of a status of at least one of the elements acting as an input node.

For example, the method may comprise accessing a digital library of data packages, e.g. of use-case scenarios, stored on the storage medium, in which each data package may comprise a definition of a plurality of types of elements required for that data package, e.g. for the use-case scenario.

The descriptive part may define a plurality of types of elements, which may comprise at least two of a virtual input node, a virtual output node and/or a type of addressable element 111,112 of the the programmable electrical system 99 that is capable of acting as an input node and/or an output node. For example, a plurality of instances of the same or different use-case scenarios may be virtually linked by linking a virtual output node of a first instance to a virtual input node of a second instance.

The method may also comprise presenting an overview of at least a part of the data packages, e.g. of the use-case scenarios in the digital library, to a user. The method may also comprise enabling the user to select one of the presented data packages, e.g. of the presented use-case scenarios, and configuring an instance of the selected data package by interactively presenting the user with choices and/or options relating to the data package, e.g. to the use-case scenario.

The step of configuring may comprise enabling the user to configure a parameter value of a parameter of the selected use-case scenario, wherein the parameter is defined by a definition stored in the digital library for the use-case scenario.

The step of configuring may comprise presenting a representation 500 of a layout of the programmable electrical system 99 to the user, communicating the plurality of types of elements required for the selected use-case scenario to the user, and enabling the user to select elements in the representation 500 of the layout that correspond to each type of the plurality of types of elements required for the selected data package.

The present invention also relates to a computer program product adapted for executing the steps of a method in accordance with embodiments of the fourth aspect of the present invention, when the computer program product is running on a computer, e.g. on a processing unit in accordance with embodiments of the first aspect of the present invention.

## Claims

1. A processing unit (100) for controlling a programmable electrical system (99) of a building, said electrical system (99) comprising a plurality of addressable elements (111,112), the processing unit (100) comprising:
- a storage medium (2) for storing a plurality of data packages, each data package comprising a descriptive part and an algorithmic part;
- an interaction interface (7) for receiving an input from a user to select one of the plurality of data packages and for configuring an instance of said selected data package by interactively presenting said user with choices and/or options relating to said data package;
- a control program (5) for controlling said plurality of addressable elements (111,112) of said programmable electrical system (99), wherein said control program (5) is configured by said interaction interface (7) and wherein, in operation of said electrical system (99), said algorithmic part is executed by the processing unit when called by said control program (5); and
- an input interface (6) for receiving an isolated data package from an external source and importing said isolated data package to said plurality of data packages on the storage medium;
wherein said descriptive part defines said choices and/or options relating to the data package that can be configured by said interaction interface (7), **characterized by** further comprising an output interface for exporting a data package in the plurality of data packages on the storage medium as an isolated data package and for providing this isolated data package to an external source.

2. The processing unit of claim 1, wherein said input interface (6) is adapted for receiving said isolated data package in a form that is also suitable for being imported by another processing unit, in accordance with claim 1, for controlling a different programmable electrical system that comprises a different plurality of addressable elements.

3. The processing unit of claim 1 or claim 2, wherein said descriptive part further comprises data for describing how said user can interact with the data package through the interaction interface.

4. The processing unit of claim 3, wherein said descriptive part comprises a definition of at least one parameter used by said algorithmic part, said interaction interface being adapted for interactively presenting said user with choices and/or options for configuring said at least one parameter.

5. The processing unit of claim 3 or claim 4, wherein said descriptive part further comprises a description of said data package, and wherein said interaction interface (7) is adapted for communicating the description of said data package to said user.

6. The processing unit of any of the previous claims, wherein said descriptive part further comprises a definition of at least one internal variable used by said algorithmic part.

7. The processing unit of any of the previous claims, wherein said data package relates to a use-case scenario and/or an action, said algorithmic part comprising an executable code for implementing at least one action defining behavior that links a plurality of types of elements defined by said descriptive part.

8. The processing unit of claim 7, wherein said algorithmic part defines a behavior of at least one element acting as an output node as a function of a status of at least one element acting as an input node.

9. The processing unit of claim 7 or 8, wherein said interaction interface (7) is adapted for presenting a representation (500) of a layout of the programmable electrical system (99) to the user.

10. The processing unit of claim 9, wherein said interaction interface (7) is adapted to receive an input from said user to select elements in the representation (500) of the layout that correspond to each type of the plurality of types of elements required for the selected data package.

11. The processing unit of any of the previous claims, wherein said descriptive part is formatted in a markup language that is both human-readable and machine-readable.

12. The processing unit of any of the previous claims, wherein said algorithmic part is formatted in a scripting language that is both human-readable and machine-interpretable.

13. A programmable electrical system (99) comprising a plurality of addressable elements (111,112) and a processing unit (100) in accordance with any of the previous claims for controlling said programmable electrical system (99).

14. A method for controlling a programmable electrical system (99) of a building, said electrical system (99) comprising a plurality of addressable elements (111,112), the method comprising:
- storing a plurality of data packages on a storage medium (2), each data package comprising a descriptive part and an algorithmic part;
- importing an isolated data package, when received by an input interface (6) from an external source, to said plurality of data packages on the storage medium (2);
- receiving an input from a user to select one of the plurality of data packages using an interaction interface (7);
- configuring an instance of said selected data package by interactively presenting said user with choices and/or options relating to said data package; and
- controlling said plurality of addressable elements (111,112) of said programmable electrical system (99) by a control program (5) that is configured by said interaction interface (7), wherein, in operation of said electrical system (99), said algorithmic part is executed by a processing unit when called by said control program (5),
wherein said descriptive part defines said choices and/or options relating to the data package that can be configured by said interaction interface (7), **characterized by** further comprising exporting a data package in the plurality of data packages on the storage medium as an isolated data package and providing this isolated data package to an external source.

15. A computer program product adapted for executing the steps of a method in accordance with claim 14 when said computer program product is running on a computer.

## Patentansprüche

1. Verarbeitungseinheit (100) zum Steuern eines programmierbaren elektrischen Systems (99) eines Gebäudes, wobei das elektrische System (99) mehrere adressierbare Elemente (111, 112) umfasst, wobei die Verarbeitungseinheit (100) Folgendes umfasst:
- ein Speichermedium (2) zum Speichern mehrerer Datenpakete, wobei jedes Datenpaket einen beschreibenden Teil und einen algorithmischen Teil umfasst;
- eine Interaktionsschnittstelle (7) zum Empfangen einer Eingabe von einem Benutzer, um eines der mehreren Datenpakete auszuwählen, und zum Konfigurieren einer Instanz des ausgewählten Datenpakets, indem dem Benutzer interaktiv Wahlmöglichkeiten und/oder Optionen in Bezug auf das Datenpaket präsentiert werden;
- ein Steuerprogramm (5) zum Steuern der mehreren adressierbaren Elemente (111, 112) des programmierbaren elektrischen Systems (99), wobei das Steuerprogramm (5) durch die Interaktionsschnittstelle (7) konfiguriert ist und wobei im Betrieb des elektrischen Systems (99) der algorithmische Teil durch die Verarbeitungseinheit ausgeführt wird, wenn er von dem Steuerprogramm (5) aufgerufen wird; und
- eine Eingabeschnittstelle (6) zum Empfangen eines isolierten Datenpakets von einer externen Quelle und Importieren des isolierten Datenpakets in die mehreren Datenpakete auf dem Speichermedium;
wobei der beschreibende Teil die Wahlmöglichkeiten und/oder Optionen in Bezug auf das Datenpaket definiert, die durch die Interaktionsschnittstelle (7) konfiguriert werden können, gekennzeichnet, indem sie ferner eine Ausgabeschnittstelle zum Exportieren eines Datenpakets in die mehreren Datenpakete auf dem Speichermedium als ein isoliertes Datenpaket und zum Bereitstellen dieses isolierten Datenpakets an eine externe Quelle umfasst.

2. Verarbeitungseinheit nach Anspruch 1, wobei die Eingabeschnittstelle (6) zum Empfangen des isolierten Datenpakets angepasst ist, in einer Form, die auch zum Importiertwerden durch eine andere Verarbeitungseinheit geeignet ist, nach Anspruch 1, zum Steuern eines unterschiedlichen programmierbaren elektrischen Systems, das eine unterschiedliche Vielzahl von adressierbaren Elementen umfasst.

3. Verarbeitungseinheit nach Anspruch 1 oder 2, wobei der beschreibende Teil ferner Daten zum Beschreiben, wie der Benutzer mit dem Datenpaket durch die Interaktionsschnittstelle interagieren kann, umfasst.

4. Verarbeitungseinheit nach Anspruch 3, wobei der beschreibende Teil eine Definition wenigstens eines Parameters umfasst, der durch den algorithmischen Teil verwendet wird, wobei die Interaktionsschnittstelle angepasst ist, um dem Benutzer interaktiv Wahlmöglichkeiten und/oder Optionen zum Konfigurieren des wenigstens einen Parameters bereitzustellen.

5. Verarbeitungseinheit nach Anspruch 3 oder 4, wobei der beschreibende Teil ferner eine Beschreibung des Datenpakets umfasst, und wobei die Interaktionsschnittstelle (7) zum Kommunizieren der Beschreibung des Datenpakets an den Benutzer angepasst ist.

6. Verarbeitungseinheit nach einem der vorhergehenden Ansprüche, wobei der beschreibende Teil ferner eine Definition wenigstens einer internen Variable umfasst, die durch den algorithmischen Teil verwendet wird.

7. Verarbeitungseinheit nach einem der vorhergehenden Ansprüche, wobei das Datenpaket sich auf ein Beispielszenario und/oder einen Vorgang bezieht, wobei der algorithmische Teil einen ausführbaren Code zum Implementieren wenigstens eines Vorgangs umfasst, der ein Verhalten definiert, das mehrere Elementarten, die durch den beschreibenden Teil definiert sind, verbindet.

8. Verarbeitungseinheit nach Anspruch 7, wobei der algorithmische Teil ein Verhalten wenigstens eines Elements definiert, das als ein Ausgabeknoten wirkt, in Abhängigkeit von einem Status wenigstens eines Elements, das als ein Eingabeknoten wirkt.

9. Verarbeitungseinheit nach Anspruch 7 oder 8, wobei die Interaktionsschnittstelle (7) zum Präsentieren einer Darstellung (500) eines Layouts des programmierbaren elektrischen Systems (99) für den Benutzer angepasst ist.

10. Verarbeitungseinheit nach Anspruch 9, wobei die Interaktionsschnittstelle (7) zum Empfangen einer Eingabe von dem Benutzer angepasst ist, um Elemente in der Darstellung (500) des Layouts auszuwählen, die jeder Art der mehreren Elementarten entsprechen, die für das ausgewählte Datenpaket erforderlich sind.

11. Verarbeitungseinheit nach einem der vorhergehenden Ansprüche, wobei der beschreibende Teil in einer Auszeichnungssprache formatiert ist, die sowohl für den Menschen lesbar als auch maschinenlesbar ist.

12. Verarbeitungseinheit nach einem der vorhergehenden Ansprüche, wobei der algorithmische Teil in einer Skriptsprache formatiert ist, die sowohl für den Menschen lesbar als auch maschineninterpretierbar ist.

13. Programmierbares elektrisches System (99), umfassend mehrere adressierbare Elemente (111, 112) und eine Verarbeitungseinheit (100) nach einem der vorhergehenden Ansprüche zum Steuern des programmierbaren elektrischen Systems (99).

14. Verfahren zum Steuern eines programmierbaren elektrischen Systems (99) eines Gebäudes, wobei das elektrische System (99) mehrere adressierbare Elemente (111, 112) umfasst, wobei das Verfahren Folgendes umfasst:
- Speichern mehrerer Datenpakete auf einem Speichermedium (2), wobei jedes Datenpaket einen beschreibenden Teil und einen algorithmischen Teil umfasst;
- Importieren eines isolierten Datenpakets, wenn es durch eine Eingabeschnittstelle (6) von einer externen Quelle empfangen wurde, in die mehreren Datenpakete auf dem Speichermedium (2);
- Empfangen einer Eingabe von einem Benutzer, um eines der mehreren Datenpakete unter Verwendung einer Interaktionsschnittstelle (7) auszuwählen;
- Konfigurieren einer Instanz des ausgewählten Datenpakets, indem dem Benutzer interaktiv Wahlmöglichkeiten und/oder Optionen in Bezug auf das Datenpaket präsentiert werden; und
- Steuern der mehreren adressierbaren Elemente (111, 112) des programmierbaren elektrischen Systems (99), durch ein Steuerprogramm (5), das durch die Interaktionsschnittstelle (7) konfiguriert ist, wobei im Betrieb des elektrischen Systems (99) der algorithmische Teil durch eine Verarbeitungseinheit ausgeführt wird, wenn er von dem Steuerprogramm (5) aufgerufen wird,
wobei der beschreibende Teil die Wahlmöglichkeiten und/oder Optionen in Bezug auf das Datenpaket definiert, die durch die Interaktionsschnittstelle (7) konfiguriert werden können, gekennzeichnet, indem sie ferner das Exportieren eines Datenpakets in die mehreren Datenpakete auf dem Speichermedium als ein isoliertes Datenpaket und das Bereitstellen dieses isolierten Datenpakets an eine externe Quelle umfasst.

15. Computerprogrammprodukt, das zum Ausführen der Schritte eines Verfahrens nach Anspruch 14 angepasst ist, wenn das Computerprogrammprodukt auf einem Computer laufengelassen wird.

## Revendications

1. Unité de traitement (100) servant à commander un système électrique programmable (99) d'un bâtiment, ledit système électrique (99) comprenant une pluralité d'éléments adressables (111, 112), l'unité de traitement (100) comprenant :
- un moyen de stockage (2) servant à stocker une pluralité de paquetages de données, chaque paquetage de données comprenant une partie descriptive et une partie algorithmique ;
- une interface d'interaction (7) servant à recevoir une entrée provenant d'un utilisateur pour sélectionner l'un parmi la pluralité de paquetages de données et servant à configurer une instance dudit paquetage de données sélectionné en présentant de manière interactive audit utilisateur des choix et/ou des options concernant ledit paquetage de données ;
- un programme de commande (5) servant à commander ladite pluralité d'éléments adressables (111, 112) dudit système électrique programmable (99), ledit programme de commande (5) étant configuré par ladite interface d'interaction (7) et, lors de l'exploitation dudit système électrique (99), ladite partie algorithmique étant exécutée par l'unité de traitement lorsqu'elle est appelée par ledit programme de commande (5) ; et
- une interface d'entrée (6) servant à recevoir un paquetage de données isolé provenant d'une source externe et à importer ledit paquetage de données isolé dans ladite pluralité de paquetages de données sur le support de stockage ;
ladite partie descriptive définissant lesdits choix et/ou options concernant le paquetage de données qui peuvent être configurés par ladite interface d'interaction (7), **caractérisée en ce qu'**elle comprend en outre une interface de sortie servant à exporter un paquetage de données parmi la pluralité de paquetages de données sur le support de stockage en tant que paquetage de données isolé, et servant à fournir ce paquetage de données isolé à une source externe.

2. Unité de traitement selon la revendication 1, dans laquelle ladite interface d'entrée (6) est conçue pour recevoir ledit paquetage de données isolé sous une forme qui est également apte à être importée par une autre unité de traitement, conformément à la revendication 1, servant à commander un système électrique programmable différent qui comprend une pluralité d'éléments adressables différente.

3. Unité de traitement selon la revendication 1 ou la revendication 2, dans laquelle ladite partie descriptive comprend en outre des données servant à décrire comment ledit utilisateur peut interagir avec le paquetage de données par l'intermédiaire de l'interface d'interaction.

4. Unité de traitement selon la revendication 3, dans laquelle ladite partie descriptive comprend une définition d'au moins un paramètre utilisé par ladite partie algorithmique, ladite interface d'interaction étant conçue pour présenter de manière interactive audit utilisateur des choix et/ou des options de configuration dudit au moins un paramètre.

5. Unité de traitement selon la revendication 3 ou 4, dans laquelle ladite partie descriptive comprend en outre une description dudit paquetage de données, et dans laquelle ladite interface d'interaction (7) est conçue pour communiquer la description dudit paquetage de données audit utilisateur.

6. Unité de traitement selon l'une quelconque des revendications précédentes, dans laquelle ladite partie descriptive comprend en outre une définition d'au moins une variable interne utilisée par ladite partie algorithmique.

7. Unité de traitement selon l'une quelconque des revendications précédentes, dans laquelle ledit paquetage de données concerne un scénario de cas d'utilisation et/ou une action, ladite partie algorithmique comprenant un code exécutable servant à mettre en œuvre au moins une action définissant un comportement reliant une pluralité de types d'éléments définis par ladite partie descriptive.

8. Unité de traitement selon la revendication 7, dans laquelle ladite partie algorithmique définit un comportement d'au moins un élément agissant comme nœud de sortie en fonction d'un statut d'au moins un élément agissant comme nœud d'entrée.

9. Unité de traitement selon la revendication 7 ou 8, dans laquelle ladite interface d'interaction (7) est conçue pour présenter une représentation (500) d'un agencement du système électrique programmable (99) à l'utilisateur.

10. Unité de traitement selon la revendication 9, dans laquelle ladite interface d'interaction (7) est conçue pour recevoir une entrée provenant dudit utilisateur pour sélectionner des éléments de la représentation (500) de l'agencement qui correspondent à chaque type de la pluralité de types d'éléments requis pour le paquetage de données sélectionné.

11. Unité de traitement selon l'une quelconque des revendications précédentes, dans laquelle ladite partie descriptive est mise en forme dans un langage de balisage qui est à la fois lisible par l'homme et lisible par la machine.

12. Unité de traitement selon l'une quelconque des revendications précédentes, dans lequel ladite partie algorithmique est mise en forme dans un langage de script qui est à la fois lisible par l'homme et interprétable par la machine.

13. Système électrique programmable (99) comprenant une pluralité d'éléments adressables (111, 112) et une unité de traitement (100) conformément à l'une quelconque des revendications précédentes servant à commander ledit système électrique programmable (99).

14. Procédé de commande d'un système électrique programmable (99) d'un bâtiment, ledit système électrique (99) comprenant une pluralité d'éléments adressables (111, 112), le procédé comprenant :
- le stockage d'une pluralité de paquetages de données sur un support de stockage (2), chaque paquetage de données comprenant une partie descriptive et une partie algorithmique ;
- l'importation d'un paquetage de données isolé, lorsqu'il est reçu par une interface d'entrée (6) en provenance d'une source externe, dans ladite pluralité de paquetages de données sur le support de stockage (2) ;
- la réception d'une entrée provenant d'un utilisateur pour sélectionner l'un parmi la pluralité de paquetages de données à l'aide d'une interface d'interaction (7) ;
- la configuration d'une instance dudit paquetage de données sélectionné, en présentant de manière interactive des choix et/ou des options concernant ledit paquetage de données audit utilisateur ; et
- la commande de ladite pluralité d'éléments adressables (111, 112) dudit système électrique programmable (99) par un programme de commande (5) qui est configuré par ladite interface d'interaction (7), ladite partie algorithmique étant, lors de l'exploitation dudit système électrique (99), exécutée par une unité de traitement lorsqu'elle est appelée par ledit programme de commande (5),
ladite partie descriptive définissant lesdits choix et/ou options concernant le paquetage de données qui peuvent être configurés par ladite interface d'interaction (7), **caractérisé en ce qu'**il comprend en outre l'exportation d'un paquetage de données parmi la pluralité de paquetages de données sur le support de stockage en tant que paquetage de données isolé et la fourniture de ce paquetage de données isolé à une source externe.

15. Produit de programme informatique conçu pour exécuter les étapes d'un procédé conformément à la revendication 14 lorsque ledit produit de programme informatique est actif sur un ordinateur.
